# EUROPÄISCHE PATENTANMELDUNG

(11) **EP 4 641 111 A1**
(43) Veröffentlichungstag der Anmeldung: **29.10.2025**
(21) Anmeldenummer: 24172802.1
(22) Anmeldetag: 26.04.2024
(51) Int. Cl.: F24S 25/613, F24S 25/632, F24S 25/634, F24S 25/70, H02S 20/23

(54) **BEFESTIGUNGSSYSTEM ZUR MONTAGE VON SOLARMODULEN**

(71) Anmelder: Ernst Schweizer AG, 8908 Hedingen (CH)
(72) Erfinder: Wermuth, Simon, 8805 Richterswil (CH)
(74) Vertreter: Frischknecht, Harry Ralph

(57) **Zusammenfassung**

Eine Befestigungssystem (1) zur Montage von Solarmodulen bzw. Solarkollektoren auf einem Dach, insbesondere einem Schrägdach, umfassend einen Grundträger (2), und ein Lagerelement (3) mit einem unteren Lagerabschnitt (4), über welchen das Lagerelement (3) mit dem Grundträger (2) verbindbar ist, und einem oberen Lagerabschnitt (5) zur Lagerung einer Befestigungseinheit (6), wobei der Grundträger (2) an einer Dachstruktur befestigbar ist, wobei der Grundträger (2) mindestens eine erste Befestigungsstellenanordnung und eine zweite Befestigungsstellenanordnung aufweist, welche Befestigungsstellenanordnungen zur Verbindung des unteren Lagerabschnitts (4) mit dem Grundträger (2) ausgebildet sind, wobei der Grundträger (2) eine erste Lagerfläche (F1), die der ersten Befestigungsstellenanordnung zugeordnet ist, und eine zweite Lagerfläche (F2), die der zweiten Befestigungsstellenanordnung zugeordnet ist, aufweist, und wobei die Befestigungsstellenanordnungen so zu der jeweiligen Lagerfläche angeordnet sind, dass bei einer Verbindung des unteren Lagerabschnitts (4) mit der ersten Befestigungsstellenanordnung das Lagerelement (3) auf einer ersten Höhenlage (H1) liegt und dass bei der Verbindung des unteren Lagerabschnitts (4) mit der zweiten Befestigungsstellenanordnung das Lagerelement (3) auf einer zweiten Höhenlage (H2) liegt, wobei die erste Höhenlage (H1) von der zweiten Höhenlage (H2) unterschiedlich ist.

## Beschreibung

### TECHNISCHES GEBIET

Die vorliegende Erfindung betrifft ein Befestigungssystem zur Montage von Solarmodulen beziehungsweise Solarkollektoren auf einem Dach, insbesondere einem Schrägdach, nach Anspruch 1.

### STAND DER TECHNIK

Befestigungselemente in Form von Dachhaken werden zur Befestigung von Solarmodulen für Photovoltaikanlagen bzw. von Sonnenkollektoren für solarthermische Anlagen auf Dächern sowie Schrägdächern verwendet. Bei einer Montage auf einem mit Dachziegeln belegtem Dach werden hakenförmig ausgebildete Befestigungselemente eingesetzt, um die Dachziegel umgreifen zu können. An einem Ende werden die Befestigungselemente mit den Dachsparren oder den Dachlatten des Hauses befestigt. Am anderen Ende tragen sie eine Schienenkonstruktion, an denen die Solarmodule bzw. Solarkollektoren befestigt werden.

Aus der WO 2014/020006 A1 wurde ein Befestigungselement bekannt, das aus einem Basisteil und einem Hakenteil besteht, wobei das Basisteil auf einem Dach montiert und das Hakenteil mittels eines Schwenk-Einrast-Mechanismus am Basisteil befestigt werden kann. Die Montage des Befestigungselements nach der WO 2014/020006 A1 kann sehr einfach und effizient vorgenommen werden. Allerdings weist das Befestigungselement nach der WO 2014/020006 A1 den Nachteil auf, dass aufgrund der Beschaffenheit des Basisteils, der Hakenteil nur auf eine bestimmte Weise mit dem Basisteil verbunden werden kann und somit die Montagehöhe der Anlage auf eine bestimmte Höhenlage limitiert ist.

### DARSTELLUNG DER ERFINDUNG

Ausgehend von diesem Stand der Technik liegt der vorliegenden Erfindung eine Aufgabe zugrunde, ein Befestigungssystem anzugeben, welches die Nachteile des Stands der Technik überwindet. Insbesondere ist es eine besonders bevorzugte Aufgabe der vorliegenden Erfindung, ein Befestigungssystem zur Montage von Solarmodulen beziehungsweise Solarkollektoren auf einem Dach, insbesondere einem Schrägdach anzugeben, welches auf eine einfache Weise verschiedene Höhenlagen für die Montage von Solarmodulen bzw. Solarkollektoren auf einem Dach, insbesondere einem Schrägdach erlaubt.

Diese und andere Aufgaben löst der Gegenstand nach Anspruch 1. Demgemäss umfasst ein Befestigungssystem einen Grundträger, und ein Lagerelement mit einem unteren Lagerabschnitt, über welchen das Lagerelement mit dem Grundträger verbindbar ist, und einen oberen Lagerabschnitt zur Lagerung einer Befestigungseinheit. Der Grundträger ist an einer Dachstruktur befestigbar. Der Grundträger weist mindestens eine erste Befestigungsstellenanordnung und eine zweite Befestigungsstellenanordnung auf, welche zur Verbindung des unteren Lagerabschnitts mit dem Grundträger ausgebildet sind. Weiter weist der Grundträger eine erste Lagerfläche, die der ersten Befestigungsstellenanordnung zugeordnet ist, und eine zweite Lagerfläche, die der zweiten Befestigungsstellenanordnung zugeordnet ist, auf. Der Grundträger liegt mit einer der beiden Lagerflächen auf der Dachstruktur auf. Die Befestigungsstellenanordnungen sind so zu der jeweiligen Lagerfläche angeordnet, dass bei einer Verbindung des unteren Lagerabschnitts mit der ersten Befestigungsstellenanordnung das Lagerelement auf einer ersten Höhenlage liegt und dass bei der Verbindung des Lagerabschnitts mit der zweiten Befestigungsstellenanordnung das Lagerelement auf einer zweiten Höhenlage liegt. Hierbei ist die erste Höhenlage von der zweiten Höhenlage unterschiedlich.

Mit anderen Worten ist das Lagerelement auf zwei unterschiedlichen Höhenlagen auf dem Dach montierbar, wobei für die erste Höhenlage der Grundträger mit der ersten Lagerfläche und für die zweite Höhenlage der Grundträger mit der zweiten Lagerfläche auf der Dachstruktur aufliegt. Der Installateur kann die Höhenlage während der Montage definieren und davon ausgehend den Grundträger entweder mit der ersten Lagerfläche oder mit der zweiten Lagerfläche auf die Dachstruktur auflegen. Es wird dem Installateur ein Befestigungssystem an die Hand gegeben, welches auf einfache Weise für unterschiedliche Höhenlagen eingesetzt werden kann.

Durch die Einstellung dieser Höhenlage kann das Lagerelement auf die lokalen Gegebenheiten eines Dachs, insbesondere bezüglich der Ziegeldicke, angepasst werden.

Die erste Befestigungsstellenanordnung weist eine erste Führungsaufnahme und einen ersten Rastvorsprung auf und die zweite Befestigungsstellenanordnung des Befestigungssystems weist eine zweite Führungsaufnahme und einen zweiten Rastvorsprung auf.

Vorzugsweise sind die erste Führungsaufnahme und die zweite Führungsaufnahme formgleich zueinander ausgebildet. Vorzugsweise sind der erste Rastvorsprung und der zweite Rastvorsprung formgleich zueinander ausgebildet. Dies weist den Vorteil auf, dass die korrespondierenden Elemente am Lagerelement mit den gleichen strukturellen Elementen sowohl in die Paarung erste Führungsaufnahme und erster Rastvorsprung als auch in die Paarung zweite Führungsaufnahme und zweiter Rastvorsprung eingreifen können. Das Lagerelement ist demnach dazu ausgebildet, an zwei unterschiedlichen Führungsaufnahmen höhenverstellbar am Grundträger einzurasten.

Gemäss einer bevorzugten Ausführungsform der Erfindung weist der Grundträger an zwei gegenüberliegenden Seitenflächen je eine sich in Richtung einer Achse erstreckende Nut auf. Einer ersten Nut wird die erste Führungsaufnahme und der zweite Rastvorsprung und der zweiten Nut wird die zweite Führungsaufnahme und der erste Rastvorsprung zugeordnet. Vorzugsweise liegen die Führungsaufnahmen und die Rastvorsprünge jeweils im Inneren der entsprechenden Nuten.

In anderen Worten umfassen die Befestigungsstellenanordnungen jeweils eine Kombination aus Führungsaufnahme und Rastvorsprung, welche vorzugsweise in Nuten liegen, die sich entlang gegenüberliegenden Seitenflächen des Grundträgers erstrecken. Die beiden Nuten verlaufen parallel beabstandet zueinander.

Die beiden Nuten sind zwischen der ersten Lagerfläche und der zweiten Lagerfläche des Grundträgers angeordnet, insbesondere so, dass der Abstand zwischen der ersten Nut und der zweiten Lagerfläche kleiner ist als der Abstand zwischen der ersten Nut und der ersten Lagerfläche und/oder so dass, der Abstand zwischen der zweiten Nut und der ersten Lagerfläche kleiner ist als der Abstand zwischen der zweiten Nut und der zweiten Lagerfläche.

Die erste Nut liegt in einer ersten Seitenwand des Grundträgers, welche sich von der ersten Lagerfläche zur zweiten Lagerfläche erstreckt. Die zweite Nut liegt in einer zweiten Seitenwand des Grundträgers, welche sich von der ersten Lagerfläche zur zweiten Lagerfläche erstreckt. Die beiden Seitenwände liegen einander gegenüber.

Der untere Lagerabschnitt des Lagerelements weist in einer bevorzugten Ausführungsform eine Rastlasche und einen Verbindungshaken auf. Beim Verbinden des unteren Lagerabschnitts mit dem Grundträger greift die Rastlasche am Rastvorsprung an bzw. ein und der Verbindungshaken ragt in die Führungsaufnahme ein. Insbesondere greift die Rastlasche derart am Rastvorsprung ein und der Verbindungshaken ragt derart in die Führungsaufnahme ein, so dass der untere Lagerabschnitt bezüglich einer Bewegung in eine Richtung senkrecht zur ersten Lagerfläche und/oder bezüglich einer Bewegung in eine Richtung quer zum Grundträger fest verbunden ist. Durch ein Hintergreifen der Rastlasche am Rastvorsprung ergibt sich eine besonders stabile Verbindung, welche insbesondere sicherstellt, dass sich der Verbindungshaken beim Einrasten der Rastlasche nicht unerwünscht löst.

Gemäss einer bevorzugten Ausführungsform sind die Rastlasche und der Verbindungshaken in einem Abstand zueinander angeordnet. Vorzugsweise entspricht der Abstand einer Breite des Grundträgers. Dadurch ergibt sich eine besonders einfache Montage, da zunächst der Verbindungshaken an einem Ende des Grundträgers in die Führungsaufnahme eingehängt wird, und anschliessend die Rastlasche durch eine Schwenkbewegung an der gegenüberliegenden Seite des Grundträgers am Rastvorsprung eingerastet wird. Zusätzlich oder in einer alternativen Ausführungsform, umfasst die Rastlasche einen an das Lagerelement angeformten Steg mit einer Rastnase.

Vorzugsweise weist der untere Lagerabschnitt einen Anschlagsteg auf, der zwischen der Rastlasche und dem Verbindungshaken angeordnet ist. Mit diesem Anschlagsteg kann sich die Rastlasche im montierten Zustand am Grundträger abstützen. Bei einer Verbindung des unteren Lagerabschnitts mit der ersten Befestigungsstellenanordnung steht der Anschlagsteg mit einer ersten Anschlagsfläche und bei einer Verbindung des unteren Lagerabschnitts mit der zweiten Befestigungsstellenanordnung steht der Anschlagsteg mit einer zweiten Anschlagsfläche in Kontakt. Dabei befindet sich die erste Anschlagsfläche auf der Seite der zweiten Lagerfläche und die zweite Anschlagsfläche auf der Seite der ersten Lagerfläche des Grundträgers.

Der Anschlagssteg weist einen Vorteil auf, dass auf das Lagerelement wirkende Druckkräfte I über den Anschlagssteg in den Grundträger eingeleitet werden. Zugkräfte, die auf das Lagerelement wirken, werden von der Rastlasche in den Grundträger eingeleitet.

Bevorzugt befinden sich die Anschlagsflächen in einer Vertiefung, vorzugsweise in einer Nut, wobei der Abstand der ersten Anschlagsfläche zur zweiten Lagerfläche grösser oder kleiner ist als der Abstand der zweiten Anschlagsfläche zur ersten Lagerfläche. Zusätzlich oder in einer alternativen Ausführungsform, befinden sich die Anschlagsflächen auf einer oder beiden der genannten Lagerflächen des Grundträgers.

Vorzugsweise ist der Grundträger als Profilschiene ausgebildet, die mindestens zwei Hohlprofilabschnitte aufweist, welche durch mindestens einen Profilsteg miteinander verbunden sind. Die Hohlprofilabschnitte sind mit Seitenwänden umfangsseitig verschlossen. Mit anderen Worten ist die Profilschiene mit mehreren parallel verlaufenden die Hohlprofilabschnitte definierenden Vorsprüngen ausgebildet, wobei zwischen den Vorsprüngen mindestens zwei in Längsrichtung des Grundträgers durchgehende Nuten verlaufen, die vorzugsweise jeweils eine rechteckige Querschnittsform aufweisen, und die jeweils eine Öffnung auf der Seite der zweiten Lagerfläche des Grundträgers aufweisen.

Gemäss einer bevorzugten Ausführungsform umfasst das Befestigungssystem weiterhin eine Grundplatte, die am Grundträger befestigbar ist. Im verbundenen Zustand mit dem Grundträger wird die Höhenlage des Lagerelements um die Höhe der Grundplatte erhöht. Vorzugsweise ist die Grundplatte mit dem Grundträger mittels einer Schnappverbindung befestigbar. Die Grundplatte ist vorzugsweise aus Kunststoff und wird insbesondere mittels eines Spritzgiessverfahrens hergestellt.

Insbesondere wird die eingangs genannte Aufgabe auch dadurch gelöst, dass das Lagerelement mittels der ersten und zweiten Befestigungsstellenanordnung und der Grundplatte auf mindestens vier verschiedenen Höhenlagen montierbar ist. Bei einer Verbindung des unteren Lagerabschnitts mit der ersten Befestigungsstellenanordnung und mit zusätzlich montierter Grundplatte liegt das Lagerelement auf einer dritten Höhenlage und bei einer Verbindung des unteren Lagerabschnitts mit der zweiten Befestigungsstellenanordnung und mit zusätzlich montierter Grundplatte liegt das Lagerelement auf einer vierten Höhenlage. Dabei ist die dritte Höhenlage von der vierten Höhenlage unterschiedlich. Die dritte und vierte Höhenlage ist auch von der ersten und zweiten Höhenlage unterschiedlich.

In anderen Worten lässt sich das Lagerelement in Kombination mit der Grundplatte auf vier verschiedene Höhenlagen montieren. Ohne die Grundplatte ist das Lagerelement mittels der zwei unterschiedlichen Befestigungsstellenanordnungen auf zwei unterschiedlichen Höhenlagen montierbar. In Kombination mit der Grundplatte und der zwei unterschiedlichen Befestigungsstellenanordnungen ist das Lagerelement auf zusätzlichen zwei Höhenlagen montierbar, die sich um die Höhe der Grundplatte von den ursprünglichen zwei Höhenlagen unterscheidet.

Gemäss einer bevorzugten Ausführungsform der Erfindung ist die Grundplatte am Grundträger mittels einer Schnappverbindung montierbar. Hierfür weist die Grundplatte mindestens zwei, vorzugsweise vier, auf gegenüberliegenden Seiten der Grundplatte angeordnete elastisch verformbare Rasthaken auf. Bei einer Verbindung der Grundplatte mit dem Grundträger greifen die Rasthaken am Grundträger ein. Vorzugsweise greifen die Rasthaken in die Ausnehmungen der mindestens zwei Hohlprofilabschnitte des Grundträgers ein. In einer zusätzlichen oder alternativen Ausführungsform greifen die Rasthaken bei einer Verbindung der Grundplatte mit dem Grundträger an den mindestens einen Profilsteg ein.

Die Ausnehmungen der mindestens zwei Hohlprofilabschnitte beziehen sich dabei auf den Hohlraum im Innenraum der Profilschienen, welche durch die umfangsseitigen Seitenwände begrenzt sind. Für eine Verbindung, welche vorzugsweise mittels Schnappverbindung erfolgt, wird die Grundplatte mit dem Grundträger deckungsgleich ausgerichtet und durch Anlegen von Druck an der Grundplatte in Richtung des Grundträgers erfolgt mit dem Einrasten der Rasthaken am Grundträger eine feste Verbindung. Im verbundenen Zustand sorgen die Rasthaken für eine feste Verbindung bei einer Bewegung in Längsrichtung des Grundträgers und/oder bei einer Bewegung in eine Richtung senkrecht zur ersten Lagerfläche. Vorzugsweise sind vier Rasthaken vorhanden, wobei je nach Position alle Rasthaken oder nur zwei einander gegenüberliegende Rasthaken mit dem Grundträger eine Rastverbindung eingehen.

Optionalerweise ist der Grundträger und die Grundplatte derart ausgebildet, dass der Grundträger Führungsvorsprünge an der ersten Lagerfläche und der zweiten Lagerfläche und die Grundplatte Führungsrillen an der mit dem Grundträger verbindbaren Seite aufweisen. Bei einer Verbindung der Grundplatte mit dem Grundträger werden die Führungsvorsprünge von den Führungsrillen aufgenommen. Wenn der Einsatz ohne Grundplatte erfolgt, drücken sich die Führungsvorsprünge in Dachsparren aus Holz ein und verhindern so ein Verrutschen oder Verdrehen des Grundträgers relativ zu den Dachsparren.

Die Anzahl Führungsvorsprünge muss nicht zwingend mit der Anzahl Führungsrillen übereinstimmen, jedoch ist die Anzahl der Führungsrillen mindestens gleich gross wie die Anzahl der Führungsvorsprünge. Durch die Aufnahme der Führungsvorsprünge des Grundträgers in den Führungsrillen der Grundplatte ergibt sich eine besonders stabile Verbindung, welche insbesondere sicherstellt, dass bei einer Bewegung in eine Richtung quer zum Grundträger die Grundplatte am Grundträger fixiert bleibt.

Gemäss einer bevorzugten Ausführungsform der Erfindung ist der Grundträger mittels mindestens eines Befestigungsmittels an einer Dachstruktur montierbar. Hierfür weist der Grundträger in den zwischen den Vorsprüngen mindestens zwei durchgehenden Nuten Aussparungen für die Aufnahme des Befestigungsmittels auf.

Vorzugsweise wird der Grundträger an einer Dachstruktur, beispielsweise einem Dachsparren, verschraubt.

Vorzugsweise erfolgt eine Verbindung und/oder Lösung zwischen dem unteren Lagerabschnitt und dem Grundträger werkzeuglos. In einer zusätzlichen oder alternativen Ausführungsform ist das Lagerelement entlang der Längsrichtung des Grundträgers im verbundenen Zustand mit dem Grundträger verschiebbar. Dies ermöglicht eine vereinfachte Montage und erleichtert die Positionierung des Lagerelements bezüglich Vorgaben durch das Dach, an welchem das Befestigungssystem zu montieren ist. Insbesondere kann das Lagerelement so zum Grundträger verschoben werden, dass dieser bei einem wellenförmigen Ziegel in das Ziegeltal zu liegen kommt.

Dem Gegenstand von Anspruch 11 liegt eine Aufgabe zugrunde, ein Befestigungssystem für die Befestigung von Solarmodulen bzw. Solarkollektoren auf einem Dach, insbesondere einem Schrägdach, anzugeben, welches eine einfache Höheneinstellung einer Befestigungseinheit des Befestigungssystems unter der Massgabe einer mechanisch stabilen Verbindung erlaubt.

Diese und andere Aufgaben löst das Befestigungssystem für die Befestigung von Solarmodulen bzw. Solarkollektoren auf einem Dach, insbesondere einem Schrägdach, nach Anspruch 11. Demgemäss umfasst ein Befestigungssystem ein Lagerelement mit einem unteren Lagerabschnitt zur Befestigung an einer Dachstruktur und einem oberen Lagerabschnitt; eine Befestigungseinheit, welche am oberen Lagerabschnitt höheneinstellbar gelagert ist, und eine Montageschiene. Die Montageschiene zur Aufnahme von Befestigungselement von den Solarmodulen bzw. Solarkollektoren ausgebildet. Die Befestigungseinheit weist ein Supportelement mit einer Auflagefläche auf, auf welcher Auflagefläche die Montageschiene aufliegt. Das Supportelement und der obere Lagerabschnitt verfügen jeweils über eine die Höhe der Befestigungseinheit am oberen Lagerabschnitt vorgebende Raststruktur. Die Raststrukturen sind derart ausgebildet und angeordnet, dass die Befestigungseinheit auf unterschiedlichen Höhenlagen am oberen Lagerabschnitt platzierbar ist. Die Befestigungseinheit umfasst weiterhin eine Klemmeinheit mit einem Spannelement. Die Klemmeinheit ist derart angeordnet und ausgebildet, dass die Klemmeinheit bei Festziehen des Spannelements
- die beiden Raststrukturen mit einer ersten Klemmkraft beaufschlagt, so dass die beiden Raststrukturen ineinander eingreifend verspannt werden, und
- die Montageschiene mit einer zweiten Klemmkraft gegen die Auflagefläche gedrückt wird.

Hierdurch kann mit einem Betätigungsvorgang gleichzeitig die Höhenlage der Befestigungseinheit mechanisch gesichert werden und die Montageschiene kann an der Befestigungseinheit fest befestigt werden.

Die Richtung der Wirkung der ersten Klemmkraft steht im Wesentlichen in einem Winkel von etwa 90° zur Richtung der Wirkung der zweiten Klemmkraft.

In Einbaulage liegt die Auflagefläche im Wesentlichen parallel zur Dachoberfläche. Die Montageschiene wird durch die Klemmeinheit gegen die Auflagefläche gedrückt und so wird eine sichere Lagerung der Montageschiene an der Befestigungseinheit erreicht.

Die Raststruktur des Supportelements greift in die Raststruktur des oberen Lagerabschnitts ein. Die Raststruktur des oberen Lagerabschnitt weist in Richtung der Höheneinstellung eine grössere Ausdehnung auf als die Raststruktur des obere Lagerabschnitts. Die Raststrukturen werden durch Rastrillen und Rastkämme bereitgestellt, wobei die Rastkämme der einen Raststruktur in die Rastrillen der anderen Raststruktur eingreifen. Die Rastrillen verlaufen vorzugsweise quer zur Richtung der besagten Höheneinstellung.

Vorzugsweise weist das Supportelement aussenseitig zwei einander gegenüberliegende Griffmulden auf. Über diese Griffmulden kann das Supportelement zur Höheneinstellung ergriffen werden. Die Griffmulden können mit Rillen versehen sein, so dass das Supportelement besser ergriffen werden kann.

Vorzugsweise weist das Supportelement eine Aufnahmeöffnung auf, durch welche der obere Lagerabschnitt hindurchragt. An einer Innenwand der Aufnahmeöffnung ist die Raststruktur des Supportelements angeordnet. An einer zur Innenwand gerichteten Fläche des oberen Lagerabschnitt ist die Raststruktur des oberen Lagerabschnitts angeordnet.

In einer Variante ist die Raststruktur am oberen Lagerabschnitt integral am Lagerabschnitt angeformt. In einer anderen Variante ist die Raststruktur am oberen Lagerabschnitt an einem mit dem oberen Lagerabschnitt fest verbundenen Rastelement angeordnet. Vorzugsweise wird das Rastelement über eine Rastverbindung fest verbunden. Diese Variante weist den Vorteil auf, dass das Supportelement als Strangpressprofil hergestellt werden kann und dass die Raststruktur dann einfach am Lagerabschnitt angebracht werden kann.

In einer Variante ist die Raststruktur am Supportabschnitt integral am Lagerabschnitt angeformt. In einer anderen Variante ist die Raststruktur am Supportabschnitt an einem mit dem oberen Lagerabschnitt fest verbundenen Rastelement angeordnet. Vorzugsweise wird das Rastelement über eine Rastverbindung fest verbunden.

Vorzugsweise ist das Rastelement, welches mit dem oberen Lagerabschnitt und/oder mit dem Supportabschnitt verbindbar ist, aus einem anderen oder aus dem gleichen Material hergestellt wie das Lagerelement. Vorzugweise weist das besagte Rastelement neben der besagten Raststruktur mindestens eine Rastlasche auf, mit welcher das Rastelement mit dem Supportelement mechanisch fest verrastet werden kann. Vorzugsweise ist das Rastelement aus Kunststoff oder Aluminium.

Das Rastelement als solches ist derart ausgebildet, dass es am Supportelement befestigbar ist. Vorzugsweise ist das Rastelement so angeordnet, dass dieses keine Stützwirkung für die Montageschiene aufweist.

Vorzugsweise umfasst die Klemmeinheit ein erstes Klemmelement und ein zweites Klemmelement. Das erste Klemmelement umfasst eine Auflagefläche und eine Durchgangsöffnung. Das zweite Klemmelement umfasst eine Gewindeöffnung. Das Spannelement liegt mit einem Kopfabschnitt an der Auflagefläche an, mit einem Schaftabschnitt ist es von der Seite der Auflagefläche her gesehen durch die Durchgangsöffnung hindurchgeführt und es greift mit einem Gewindeabschnitt in die Gewindeöffnung ein. Die beiden Klemmenelemente sind bei einem Einschraubvorgang des Gewindeabschnitts in die Gewindeöffnung hinein entlang einer Bewegungsrichtung aufeinander zu bewegbar. Die Gewindeöffnung kann eine gestanzte Bohrung und der Gewindeabschnitt kann ein selbstschneidendes oder selbstfurchendes Gewinde sein, welches in die Bohrung eingeschraubt wird. Die Gewindeöffnung kann aber auch ein geschnittenes Gewinde sein.

Vorzugsweise weist mindestens eines der Klemmelemente eine winklig geneigt zur besagten Bewegungsrichtung angeordnete Wirkfläche auf, welche an einer Gegenfläche am Supportelement derart anliegt, dass das Klemmelement mit der Wirkfläche bei Betätigung des Spannelements die beiden Raststrukturen mit der ersten Klemmkraft beaufschlagt. Besonders bevorzugt ist die Wirkfläche am zweiten Klemmelement angeordnet.

Vorzugsweise weist mindestens eines der beiden Klemmelemente mindestens eine klemmelementseitige Klemmfläche auf, welche an einer lagerabschnittseitigen Klemmfläche am oberen Lagerabschnitt anliegt, wobei über dieses Anliegen die besagte zweite Klemmkraft aufbringbar ist.

Vorzugsweise weist das Klemmelement eine erste Auflagefläche und das zweite Klemmelement weist eine zweite Auflagefläche auf, wobei das erste Klemmelement über die erste Auflagefläche an der zweiten Auflagefläche am zweiten Klemmelement abgestützt ist.

Weiter weist das erste Klemmelement eine Stützfläche auf, mit welcher das erste Klemmelement auf einer Fläche am Supportelement abgestützt ist. Die Stützfläche und die Fläche liegen gegenüber des klemmelementseitigen Klemmabschnitts, welcher den montageschienenseitigen Klemmabschnitt klemmt.

In einer besonders bevorzugten Ausführungsform sind sowohl die Klemmflächen als auch die Auflageflächen vorhanden. In einer ersten Ausrichtung stehen die beiden Auflageflächen miteinander in Kontakt und die Stützfläche liegt an der genannten Fläche am Supportelement an. In einer zweiten Ausrichtung stehen die beiden Auflageflächen miteinander in Kontakt und die Stützfläche liegt an der Fläche am Supportelement an. Die Fläche erstreckt sich dabei so, dass die Stützfläche an unterschiedlichen Orten mit der Fläche in Kontakt ist.

Vorzugsweise weist das erste Klemmelement einen klemmelementseitigen Klemmabschnitt auf und die Montageschiene weist einen montageschienenseitigen Klemmabschnitt auf. Die beiden genannten Klemmabschnitte greifen ineinander ein.

Besonders bevorzugt sind die beiden Klemmabschnitte mit einem Hinterschnitt ausgebildet. Der Hinterschnitt wirkt vorzugsweise derart, dass die Montageschiene bezüglich einer Richtung, die quer zur Mittelachse der Montageschiene und parallel zur Auflagefläche verläuft im Eingriff mit dem ersten Klemmelement steht.

Vorzugsweise weist das erste Klemmelement einen klemmelementseitigen Führungsabschnitt auf und die Montageschiene weist einen montageschienenseitigen Führungsabschnitt auf. Die Führungsabschnitte verfügen vorzugsweise über mindestens eine Führungsausnehmung und mindestens einen Führungskamm. Jeweils ein Führungskamm ragt in eine Führungsausnehmung ein.

Vorzugsweise weist das zweite Klemmelement zwei Schenkelabschnitte auf, welche winklig geneigt zueinander verlaufen, wobei die Schenkelabschnitte an deren freien Enden jeweils die klemmelementseitige Klemmfläche aufweisen. Einer der Schenkelabschnitte wirkt dabei im inneren der Aufnahmeöffnung auf die lagerabschnittseitige Klemmfläche. Der andere der beiden Schenkelabschnitte ragt aus der Aufnahmeöffnung und wirkt ausserhalb der Aufnahmeöffnung auf die lagerabschnittseitige Klemmfläche. Die Schenkelabschnitte haben den Vorteil, dass diese eine thermische Ausdehnung aufgrund von Temperaturänderungen gut ausgleichen können.

Vorzugsweise ist das zweite Klemmelement mit einem der beiden Schenkelabschnitt im oberen Bereich des Supportelements am oberen Lagerabschnitt abgestützt. Diese Abstützung hat den Vorteil, dass im Falle eines Windsogs das Supportelement nicht über das freie Ende des oberen Lagerabschnitts abkippen kann.

Vorzugsweise ist weiterhin ein Federelement angeordnet, welches Federelement eine Federkraft in Richtung der ersten Klemmkraft bereitstellt, derart, dass die beiden Raststrukturen aufgrund der Federkraft aufeinander zu bewegbar sind, wobei die Federkraft kleiner als die erste Klemmkraft ist.

Vorzugsweise liegt das Federelement im Inneren der besagten Aufnahmeöffnung.

Vorzugsweise liegt das Federelement zwischen einer der Raststruktur am Supportelement gegenüberliegenden Seitenwand der Aufnahmeöffnung und dem zweiten Klemmelement liegt.

Vorzugsweise weist das Federelement eine quaderförmige Struktur auf und ist aus einem elastischen Material ist.

Vorzugsweise weist das Supportelement zwei der genannten Auflageflächen für die Montageschiene auf, wobei die beiden Auflageflächen derart angeordnet sind, dass die Montageschiene in unterschiedlichen Richtungen orientiert auf der jeweils einer der Auflageflächen platzierbar ist.

Hierdurch wird ermöglicht, dass die Montageschiene auf einem Schrägdach parallel zum First oder rechtwinklig zum First bzw. parallel zum Ortgang ausgerichtet werden kann.

Vorzugsweise kann das erste Klemmelement bezüglich der jeweiligen Auflagefläche ausgerichtet werden, derart, dass das Klemmelement die Montageschiene zur einen Auflagefläche oder zur anderen Auflagefläche klemmt.

Vorzugsweise weist das Supportelement im Bereich der Auflagefläche einen Durchbruch 83 auf. Die Auflagefläche umgibt dabei den Durchbruch und kann beispielsweise als Steg ausgebildet sein, welcher bevorzugt eine Breite von 4 bis 20 Millimeter aufweist. Durch den Durchbruch kann Material eingespart werden.

In einer bevorzugten Weiterbildung umfasst das Befestigungssystem die Merkmale von Anspruch 1 sowie den davon abhängigen Ansprüchen mit den optionalen Merkmalen und von Anspruch 11 sowie den davon abhängigen Ansprüchen mit den optionalen Merkmalen.

Gemäss dieser bevorzugten Weiterbildung umfasst ein Befestigungssystem einen Grundträger, und ein Lagerelement mit einem unteren Lagerabschnitt, über welchen das Lagerelement mit dem Grundträger verbindbar ist, und einen oberen Lagerabschnitt zur Lagerung einer Befestigungseinheit sowie eine Montageschiene. Der Grundträger ist an einer Dachstruktur befestigbar. Der Grundträger weist mindestens eine erste Befestigungsstellenanordnung und eine zweite Befestigungsstellenanordnung auf, welche zur Verbindung des unteren Lagerabschnitts mit dem Grundträger ausgebildet sind. Weiter weist der Grundträger eine erste Lagerfläche, die der ersten Befestigungsstellenanordnung zugeordnet ist, und eine zweite Lagerfläche, die der zweiten Befestigungsstellenanordnung zugeordnet ist, auf. Der Grundträger liegt mit einer der beiden Lagerflächen auf der Dachstruktur auf. Die Befestigungsstellenanordnungen sind so zu der jeweiligen Lagerfläche angeordnet, dass bei einer Verbindung des unteren Lagerabschnitts mit der ersten Befestigungsstellenanordnung das Lagerelement auf einer ersten Höhenlage liegt und dass bei der Verbindung des Lagerabschnitts mit der zweiten Befestigungsstellenanordnung das Lagerelement auf einer zweiten Höhenlage liegt. Hierbei ist die erste Höhenlage von der zweiten Höhenlage unterschiedlich. Die Montageschiene zur Aufnahme von Befestigungselement von den Solarmodulen bzw. Solarkollektoren ausgebildet. Die Befestigungseinheit weist ein Supportelement mit einer Auflagefläche auf, auf welcher Auflagefläche die Montageschiene aufliegt. Das Supportelement und der obere Lagerabschnitt verfügen jeweils über eine die Höhe der Befestigungseinheit am oberen Lagerabschnitt vorgebende Raststruktur. Die Raststrukturen sind derart ausgebildet und angeordnet, dass die Befestigungseinheit auf unterschiedlichen Höhenlagen am oberen Lagerabschnitt platzierbar ist. Die Befestigungseinheit umfasst weiterhin eine Klemmeinheit mit einem Spannelement. Die Klemmeinheit ist derart angeordnet und ausgebildet, dass die Klemmeinheit bei Festziehen des Spannelements
- die beiden Raststrukturen mit einer ersten Klemmkraft beaufschlagt, so dass die beiden Raststrukturen ineinander eingreifend verspannt werden, und
- die Montageschiene mit einer zweiten Klemmkraft gegen die Auflagefläche gedrückt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht des Befestigungssystems mit einer Klemmeinheit gemäss einer bevorzugten Ausführungsform der vorliegenden Erfindung von oben schräg;
- Fig. 2: eine perspektivische Ansicht des Befestigungssystems nach Figur 1 von oben schräg ohne Montageprofil, wobei die Klemmeinheit gegenüber der Figur 1 verschwenkt ist
- Fig. 3a: Seitenansicht des unteren Lagerabschnitts des Befestigungssystems im verbundenen Zustand mit dem Grundträger, wobei der untere Lagerabschnitt mit der ersten Befestigungsstellenanordnung verbunden ist;
- Fig. 3b: Seitenansicht des unteren Lagerabschnitts des Befestigungssystems im verbundenen Zustand mit dem Grundträger, wobei der untere Lagerabschnitt mit der zweiten Befestigungsstellenanordnung verbunden ist;
- Fig. 3c: Seitenansicht des unteren Lagerabschnitts des Befestigungssystems im verbundenen Zustand mit dem Grundträger und der Grundplatte, wobei der untere Lagerabschnitt mit der ersten Befestigungsstellenanordnung verbunden ist;
- Fig. 3d: Seitenansicht des unteren Lagerabschnitts des Befestigungssystems im verbundenen Zustand mit dem Grundträger und der Grundplatte, wobei der untere Lagerabschnitt mit der zweiten Befestigungsstellen-anordnung verbunden ist;
- Fig. 4a: eine Seitenansicht des unteren Lagerabschnitts des Befestigungssystems, die das Einrasten des Lagerelements am Grundträger mit der ersten Befestigungsstellenanordnung verdeutlicht;
- Fig. 4b: eine Seitenansicht des unteren Lagerabschnitts des Befestigungssystems, die das Einrasten des Lagerelements am Grundträger mit der zweiten Befestigungsstellenanordnung verdeutlicht;
- Fig. 5: eine perspektivische Ansicht des Grundträgers und der Grundplatte des Befestigungssystems;
- Fig. 6: eine perspektivische Explosionsdarstellung der Befestigungseinheit;
- Fig. 7: eine explodierte Seitenansicht von Teilen von der Figur 6;
- Fig. 8: eine teilweise geschnittene Ansicht der Befestigungssystem der vorhergehenden Figuren;
- Fig. 9a: eine teilweise geschnittene Ansicht der Befestigungseinheit des Befestigungssystems der vorhergehenden Figuren;
- Fig. 9b: eine teilweise geschnittene Ansicht der Befestigungseinheit des Befestigungssystems nach Figur 9a mit einer Montageschiene im losen Zustand; und
- Fig. 9c: eine teilweise geschnittene Ansicht der Befestigungseinheit des Befestigungssystems nach Figur 9a mit einer Montageschiene im gespannten Zustand.

### BESCHREIBUNG BEVORZUGTER AUSFÜHRUNGSFORMEN

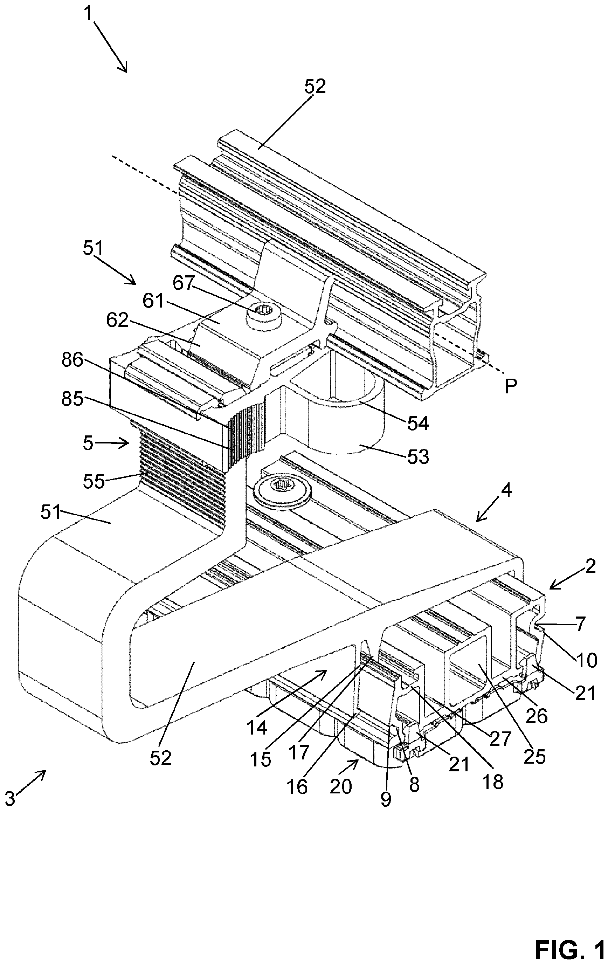

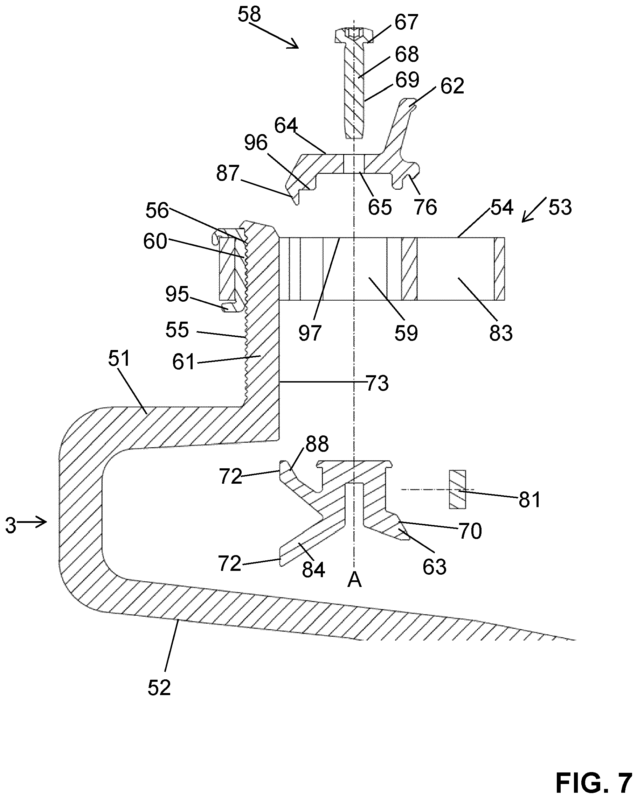

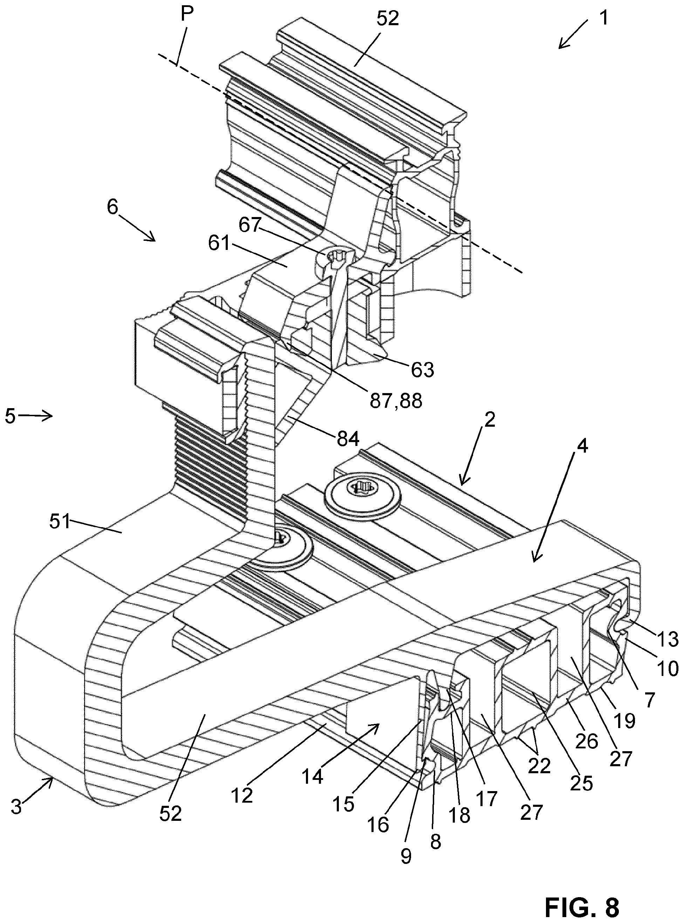

Anhand der Figuren 1 bis 9c wird nun ein Befestigungssystem 1 genauer beschrieben. Das Befestigungssystem 1 umfasst einen Grundträger 2, ein Lagerelement 3 mit einem unteren Lagerabschnitt 4 und einem oberen Lagerabschnitt 5. Das Lagerelement 3 wird mit dem unteren Lagerabschnitt 4 an einer Dachstruktur, wie beispielsweise einem Dachsparren, fest verbunden. Dies kann direkt oder indirekt, beispielsweise über den Grundträger 2, erfolgen. Das Befestigungssystem 1 umfasst weiter eine Befestigungseinheit 51, welche am oberen Lagerabschnitt 5 höheneinstellbar gelagert ist.

In der gezeigten Ausführungsform ist das Lagerelement 3 im Wesentlichen U-förmig ausgebildet, wobei ein erster Schenkel S1 etwa in der Hälfte dieses Schenkels nach aussen gebogen ist und rechtwinklig zur Längsrichtung des Lagerelements 3 absteht. Am Ende des ersten Schenkels S1 ist der obere Lagerabschnitt 5 gelagert. An einem gegenüberliegenden zweiten Schenkel S2 des Lagerelements 3 befindet sich der untere Lagerabschnitt 4, der einen Verbindungshaken 13 sowie eine Rastlasche 14 aufweist. Die Rastlasche 14 umfasst weiter einen Steg 15 mit einer Rastnase 16. Wie in den Figuren gezeigt, ist die Rastlasche 14 vom Verbindungshaken 13 in Längsrichtung des Lagerelements 3 beabstandet angeordnet. Dabei befindet sich der Verbindungshaken 13 am freien Ende des zweiten Schenkels S2 des Lagerelements 3. Weiter ist der Bereich des zweiten Schenkels S2, welcher der untere Lagerabschnitt 4 umfasst und der im montierten Zustand über dem Grundträger 2 liegt, etwas abgewinkelt und dadurch weiter geöffnet.

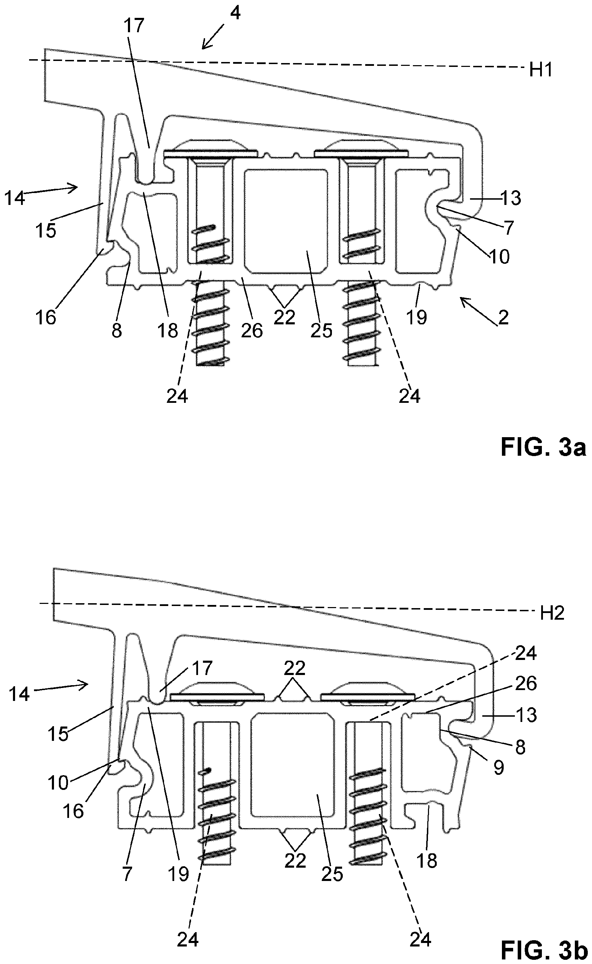

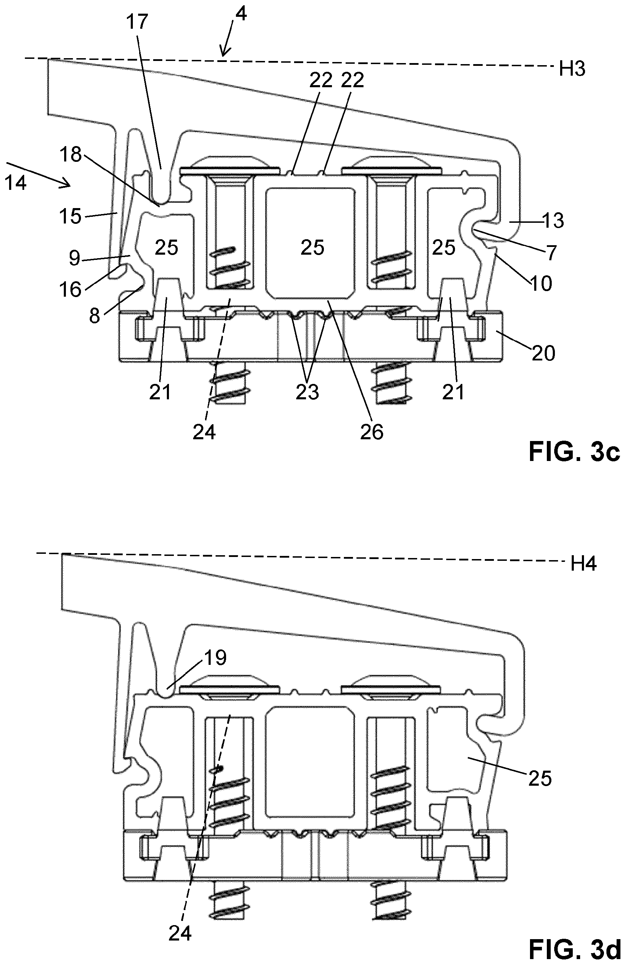

Wie aus den Figuren ersichtlich, weist der untere Lagerabschnitt 4 des Lagerelements 3 ferner einen optionalen Anschlagsteg 17 auf, der zwischen dem Verbindungshaken 13 und der Rastlasche 14 in unmittelbarer Nähe der Rastlasche 14 angeordnet ist. Der Anschlagsteg 17 ist am Lagerelement 3 angeformt und zeigt in den Figuren nach unten, heisst zum Grundträger 2 hin. Im verbundenen Zustand des Lagerelements 3 mit dem Grundträger 2 stützt sich das Lagerelement 3 über den Anschlagsteg 17 auf einer Anschlagsfläche 18, 19 ab. Figuren 3 a und 3b zeigen den unteren Lagerabschnitt 4 und den Grundträger 2 im verbundenen Zustand, wobei in Figur 3a der untere Lagerabschnitt 4 mit der ersten Befestigungsstellenanordnung und in Figur 3b der untere Lagerabschnitt 4 mit der zweiten Befestigungsstellenanordnung verbunden ist. In Figur 3a stützt sich das Lagerelement 3 über den Anschlagsteg 17 auf der ersten Anschlagsfläche 18 ab und in Figur 3b stützt sich das Lagerelement 3 über den Anschlagsteg 17 auf der zweiten Anschlagsfläche 19 ab. So wird unter Last die auf das Lagerelement 3 wirkende Kraft als Druckkraft in den Grundträger 2 eingeleitet. Die Rastlasche 14 übernimmt eine wirkende Zugkraft.

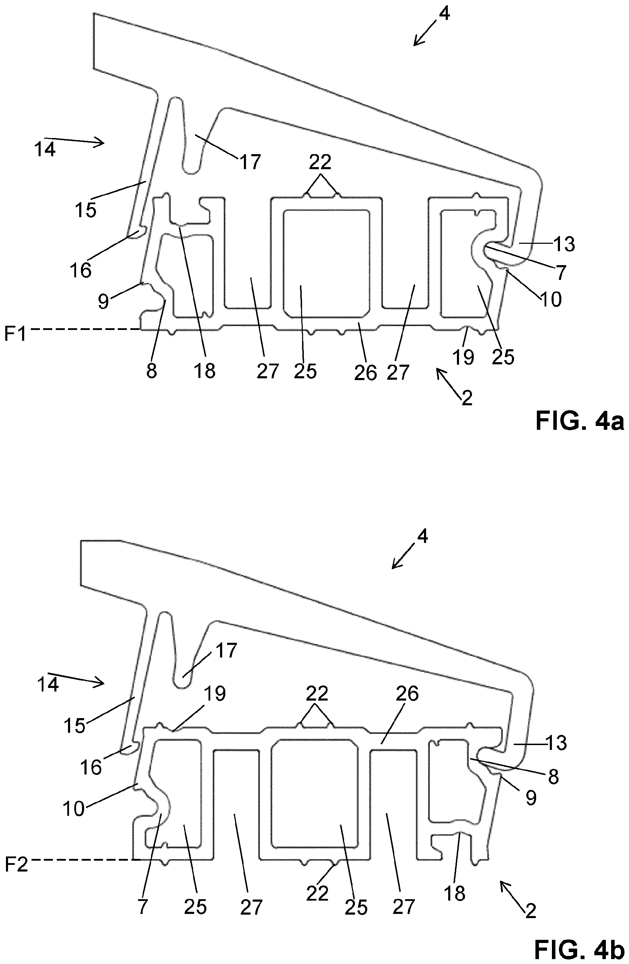

Der untere Lagerabschnitt 4 des Lagerelements 3 ist mit einem Grundträger einfach, insbesondere werkzeuglos, verbindbar. Diese Verbindung wird weiter unten anhand der Figuren 4a und 4b genauer erläutert.

In der gezeigten Ausführungsform ist der Grundträger 2 als Profilschiene ausgebildet. Insbesondere weist der Grundträger 2 drei parallel verlaufende Vorsprünge auf, wobei zwischen den Vorsprüngen zwei in Längsrichtung des Grundträgers 2 durchgehende Nuten 27 verlaufen. Die Profilnuten 27 weisen eine rechteckige Querschnittsform auf und sind jeweils so ausgerichtet, dass die Nutöffnungen jeweils in Richtung der zweiten Lagerfläche F2 zeigen. Die drei Vorsprünge sind jeweils umfangseitig umrandet und weisen einen Hohlraum im Innenraum auf, so dass sie drei Hohlprofilabschnitte 25 bilden. Die Hohlprofilabschnitte 25 werden durch einen Profilsteg 26 miteinander verbunden.

Der Grundträger 2 weist zwei Befestigungsstellenanordnungen an den Seitenflächen des Grundträgers 2 auf, welche zur Verbindung des unteren Lagerabschnitts 4 ausgebildet sind. Dabei umfasst eine Befestigungsstellenanordnung jeweils eine Kombination von Führungsaufnahme 7,8, Rastvorsprung 9, 10, und wie in der gezeigten Ausführungsform einer Anschlagsfläche 18, 19. Die Befestigungsstellenanordnungen sind den zwei Lagerflächen F1, F2 zugeordnet, so dass das Lagerelement 3 auf verschiedenen Höhenlagen durch ein einfaches Wenden des Grundträgers 2 montierbar ist.

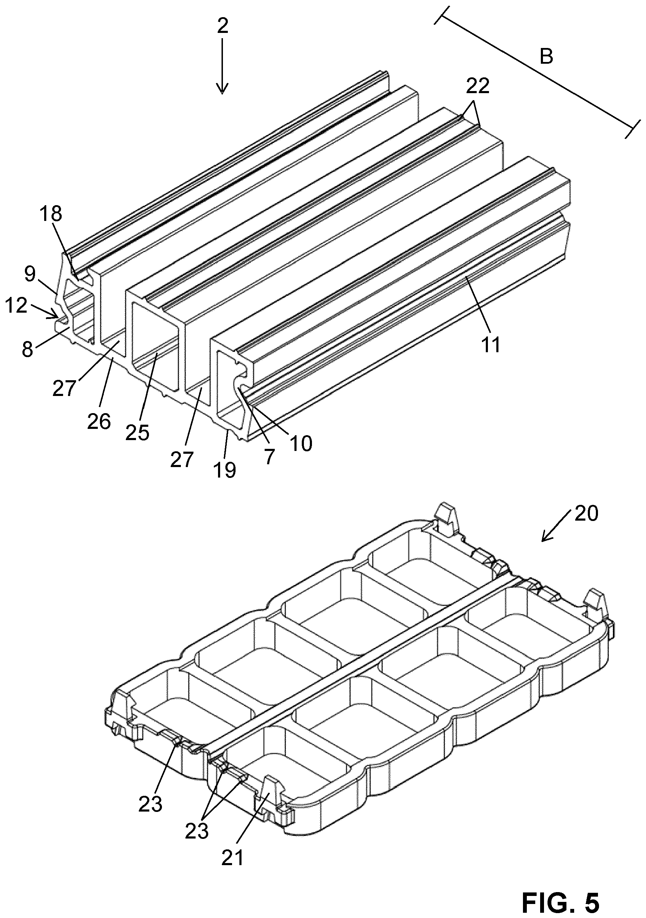

Weiter umfasst das Befestigungssystem 1 eine Grundplatte 20 (siehe Figur 5), welche sich mit dem Grundträger 2 verbinden lässt. Durch das Anbringen der Grundplatte 20 am Grundträger 2 wird die Höhenlage des mit dem Grundträger 2 verbundenen Lagerelements 3 um die Höhe der Grundplatte 20 erhöht. Mit der Grundplatte 20 und in Kombination mit den zwei Befestigungsstellenanordnungen, lässt sich so das Lagerelement 3 auf vier verschiedene Höhenlagen montieren. Figuren 3c und 3d zeigen den unteren Lagerabschnitt 4 im verbundenen Zustand mit dem Grundträger 2, welcher wiederum mit der Grundplatte 20 verbunden ist. Aus den Figuren sind ebenfalls die unterschiedlichen Höhenlagen, insbesondere die dritte H3 und vierte Höhenlage H4, ersichtlich.

Die Grundplatte 20 weist mindestens die gleiche Grundfläche auf wie der Grundträger 2 und ist vorzugsweise aus einem anderen oder aus dem gleichen Material hergestellt wie der Grundträger 2. Gemäss der gezeigten Ausführungsform, weist die Grundplatte 20 vier, insbesondere je zwei auf gegenüberliegenden Seiten der Grundplatte 20 angeordnete, elastisch verformbare Rasthaken 21 auf. Die Rasthaken 21 sind an der Grundplatte 20 angeformt und stehen rechtwinklig zur Längsachse der Grundplatte 20 ab. Die auf derselben Seite der Grundplatte 20 liegenden Rasthaken 21 sind derart zueinander beabstandet, dass bei einer Verbindung der Grundplatte 20 mit dem Grundträger 2 in die Ausnehmungen, insbesondere Hohlräume, der Hohlprofile des Grundträgers 2 und/oder an den Profilsteg 26 eingreifen.

Die Grundplatte 20 ist vorzugsweise mittels einer Schnappverbindung mit dem Grundträger 2 verbindbar. Hierfür wird die Grundplatte 20 deckungsgleich mit dem auf der ersten oder zweiten Lagerfläche F1, F2 liegenden Grundträger 2 ausgerichtet und durch Anlegen von Druck an der Grundplatte 20 in Richtung des Grundträgers 2 durch das Eingreifen der Rasthaken 21 am Grundträger 2 miteinander verbunden. Im verbundenen Zustand gewährleisten die Rasthaken 21 eine feste Verbindung betreffend einer Bewegung in Längsrichtung des Grundträgers 2 und/oder bei einer Bewegung in eine Richtung senkrecht zur ersten Lagerfläche F1 und wirken so einem unerwünschten Lösen der Verbindung entgegen.

In der gezeigten Ausführungsform, insbesondere in Figuren 3c und 3d sowie beispielsweise in Figur 5, weist der Grundträger 2 Führungsvorsprünge 22 und die Grundplatte 20 Führungsrillen 23 an der mit dem Grundträger 2 verbindbaren Seite auf. Durch die Aufnahme der Führungsvorsprünge 22 des Grundträgers 2 in den Führungsrillen 23 der Grundplatte 20 wird insbesondere sichergestellt, dass bei einer Bewegung in eine Richtung quer zum Grundträger 2 die Grundplatte 20 am Grundträger 2 fest fixiert bleibt. Bei einer Montage des Grundträgers ohne Grundplatte, werden die Führungsvorsprünge ins Holz gepresst und verhindern ein Verrutschen oder Verdrehen des Grundträgers.

Anhand der Figuren 4a und 4b wird nun der Verbindungsvorgang zwischen dem unteren Lagerabschnitt 4 und dem Grundträger 2 erläutert.

In Figur 4a wird der Grundträger 2 auf der ersten Lagerfläche F1 liegend dargestellt. In dieser Ausrichtung wird die erste Befestigungsstellenanordnung für eine Verbindung genutzt. Dabei wird der Verbindungshaken 13 in die erste Führungsaufnahme 7 eingehängt und mittels einer Schwenkbewegung die Rastlasche 14 am ersten Rastvorsprung 9 an der gegenüberliegenden Seite des Grundträgers 2 eingerastet.

In Figur 4b liegt der Grundträger 2 auf der zweiten Lagerfläche F2 auf und die zweite Befestigungsstellenanordnung wird für die Verbindung des unteren Lagerabschnitts 4 mit dem Grundträger 2 verwendet. Dabei wird der Verbindungshaken 13 in die zweite Führungsaufnahme 8 eingeführt und die Rastlasche 14 auf der gegenüberliegenden Seite am zweiten Rastvorsprung 10 durch eine Schwenkbewegung eingerastet.

Diese Vorgehensweise, insbesondere durch das Einhängen des Verbindungshakens 13 gefolgt von einer Schwenkbewegung zum Einrasten der Rastlasche 14, ergibt eine besonders sichere Montage mit erhöhter Montagefreundlichkeit, insbesondere für den auf dem Dach arbeitenden Installateur.

In der gezeigten Ausführungsform wird die Montagefreundlichkeit zusätzlich dadurch erhöht, indem das mit dem Grundträger 2 verbundene Lagerelement 3 entlang der Längsachse des Grundträgers 2 verschiebbar ist. Dies erleichtert beispielsweise die Positionierung des Lagerelements 3 relativ zu einem zweiten Lagerelement 3 bei der Montage einer Solaranlage.

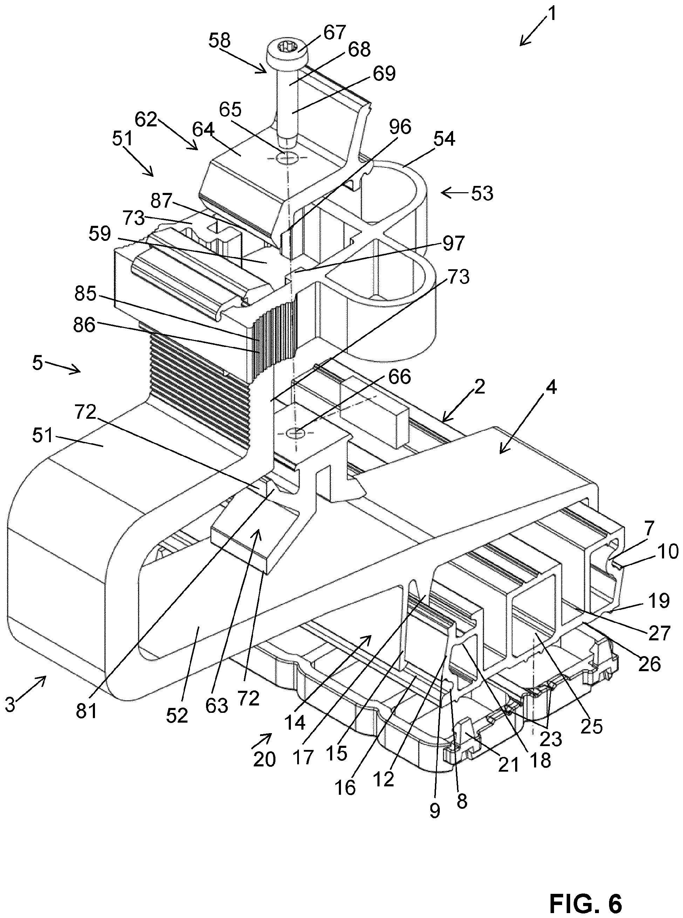

Anhand der Figuren 1 bis 9c, insbesondere anhand der Figuren 6 bis 9c, wird nun eine weitere Ausführung eines Befestigungssystem 1 genauer beschrieben. Die weitere Ausführung des Befestigungssystem 1 kann, wie in den Figuren gezeigt, mit dem oben beschriebenen Grundträger 2 und dem Lagerelement 3 eingesetzt werden. Alternativerweise kann das Befestigungssystems 1 auch mit anders ausgebildeten Lagerelementen bzw. Grundträger eingesetzt werden.

Das Befestigungssystem 1 umfasst ein Lagerelement 3, eine am Lagerelement 3 höheneinstellbar gelagerte Befestigungseinheit 51 und eine Montageschiene 52.

Das Lagerelement 3 umfasst einen unteren Lagerabschnitt 4 und einen oberen Lagerabschnitt 5. Das Lagerelement 3 wird mit dem unteren Lagerabschnitt 4 an einer Dachstruktur, wie beispielsweise einem Dachsparren, fest verbunden. Dies kann direkt oder indirekt, beispielsweise über den oben beschriebenen Grundträger 2, erfolgen. Die Befestigungseinheit 51 ist am oberen Lagerabschnitt 5 höheneinstellbar gelagert. Das heisst, die Position der Befestigungseinheit 51 kann relativ zum oberen Lagerabschnitt 5 eingestellt werden. In Einbaulage kann die Befestigungseinheit 51 demnach zur Oberfläche der Dachstruktur eingestellt werden.

Die Montageschiene 52 ist als Profil ausgebildet und wird über die Befestigungseinheit 51 am Lagerelement 3 fest gelagert. Die Montageschiene 52 umfasst eine Befestigungsstruktur 89, an welcher Teile der Solarmodule bzw. Solarkollektoren befestigt werden können. Die Befestigungsstruktur 89 weist hier die Form einer Nute 90, hier einer T-Nute auf, welche sich in Richtung der Profilachse P der Montageschiene 52 erstreckt. Die Nute 90 ist seitlich mit zwei Begrenzungsstegen 91 begrenzt und am freien Ende der Begrenzungsstege 91 erstreckt sich ein Quersteg 92 auf beide Seiten der Begrenzungsstege 91. Unterhalb der Nute 90 umfasst die Montageschiene 52 ein in Richtung der Profilachse P sich erstreckenden Hohlraum 93, der seitlich mit Seitenwänden 94 begrenzt ist.

Die Befestigungseinheit 51 umfasst ein Supportelement 53 und eine Klemmeinheit 57 mit einem Spannelement 58.

Das Supportelement 53 weist eine Auflagefläche 54 auf, auf welcher die Montageschiene 52 im montierten Zustand aufliegt. Das Supportelement 53 und der obere Lagerabschnitt 5 verfügen jeweils über eine Raststruktur 55, 56. Die beiden Raststrukturen können an unterschiedlichen Positionen miteinander verbunden sein und geben dadurch die Höhe der Befestigungseinheit 51 am oberen Lagerabschnitt 5 vor. Die beiden Raststrukturen 55, 56 sind derart ausgebildet und angeordnet, dass die Befestigungseinheit 51 auf unterschiedlichen Höhenlagen am oberen Lagerabschnitt 5 platzierbar ist.

Die Klemmeinheit 57 ist derart angeordnet und ausgebildet ist, dass die Klemmeinheit 57 bei Festziehen des Spannelements 58 die beiden Raststrukturen 55, 56 mit einer ersten Klemmkraft K1 beaufschlagt, so dass die beiden Raststrukturen 55, 56 ineinander eingreifend verspannt werden, und dass die Montageschiene 52 mit einer zweiten Klemmkraft K2 gegen die Auflagefläche 54 gedrückt wird. Mit einer einzigen Bewegung kann das Supportelement 53 zum oberen Lagerabschnitt 5 und die Montageschiene 52 kann zum Supportelement 53 festgelegt werden.

Von der Figur 6 ist ersichtlich, dass das Supportelement 53 eine Aufnahmeöffnung 59 aufweist. Der obere Lagerabschnitt 5 ragt dabei in Einbaulage gesehen von unten her in die Aufnahmeöffnung 59 hinein und erstreckt sich vollständig durch die Aufnahmeöffnung 59 hindurch. An einer Innenwand 60 der Aufnahmeöffnung 59 ist die Raststruktur 56 des Supportelements angeordnet. Die Raststruktur 56 ist hier indirekt über ein Zwischenteil 95 an der Innenwand 60 angeordnet. Das Zwischenteil 95 weist die Raststruktur 56 auf und kann mit dem Supportelement 53 verbunden werden. Die Raststruktur 56 kann aber auch direkt an der Innenwand 60 angeformt sein. Der obere Lagerabschnitt 5 weist eine Fläche 61 auf, welche zur Innenwand 60 gerichtet ist. An der Fläche 61 weist der obere Lagerabschnitt die Raststruktur 55 des oberen Lagerabschnitts 5 auf.

Die Klemmeinheit 57 umfasst, wie von den Figuren 6 bis 9c ersichtlich, ein erstes Klemmelement 62 und ein zweites Klemmelement 63. Das erste Klemmelement 62 ist in der gezeigten Ausführungsform in Einbaulage gesehen oberhalb des zweiten Klemmelements 63 angeordnet. Das erste Klemmelement 62 weist eine Auflagefläche 64 und eine Durchgangsöffnung 65 auf. Das zweite Klemmelement 63 weist eine Gewindeöffnung 66 auf. Das Spannelement 58 weist einen Kopfabschnitt 67, einen sich daran anschliessenden Schaftabschnitt 68 und einen sich dem Schaftabschnitt 68 anschliessenden Gewindeabschnitt 69 auf. Das Gewinde des Gewindeabschnitts 69 kann sich auch über die Länge oder eine Teillänge des Schaftabschnitts 68 erstrecken. Das Spannelement 58 liegt mit dem Kopfabschnitt 67 an der Auflagefläche 64 an, wird mit einem Schaftabschnitt 68 von der Seite der Auflagefläche 64 her gesehen durch die Durchgangsöffnung 65 hindurchgeführt und greift mit einem Gewindeabschnitt 69 in die Gewindeöffnung 66 ein. Die beiden Klemmenelemente 62, 63 sind bei einem Einschraubvorgang des Gewindeabschnitts 69 in die Gewindeöffnung 66 hinein entlang einer Bewegungsrichtung A aufeinander zu bewegbar sind. Über diese Bewegung entlang der Bewegungsrichtung A und das Festziehen des Spannelements 58 werden die oben beschriebenen Klemmkräfte K1 und K2 bereitgestellt.

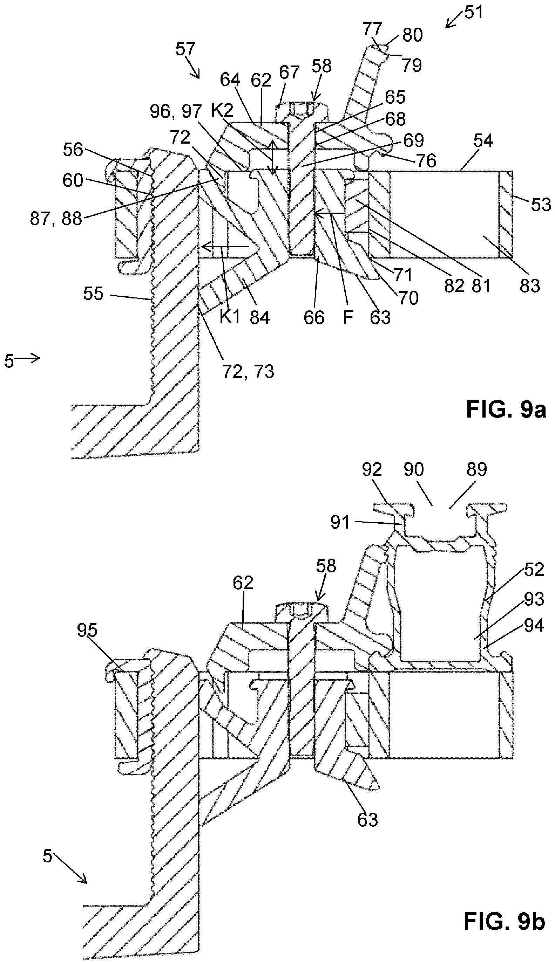

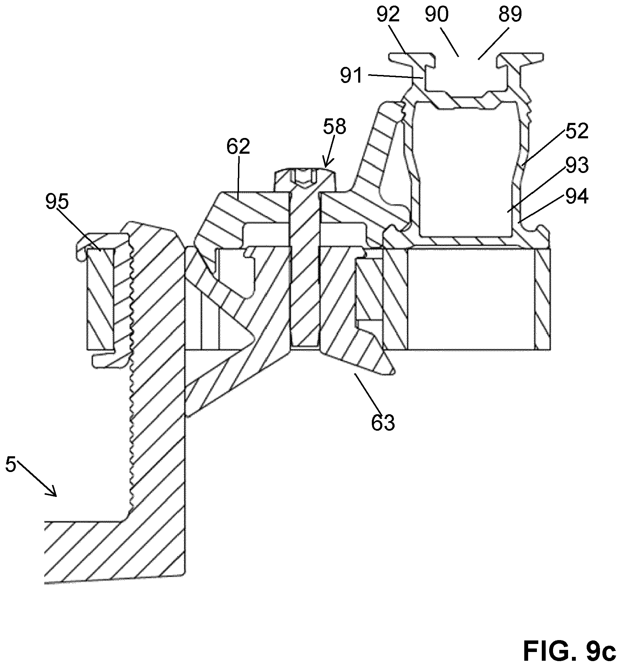

Anhand der Figuren 9a bis 9c wird die Bereitstellung der beiden Klemmkräfte K1 und K2 sowie die Zusammenwirkung der beiden Klemmelemente 62, 63 genauer erläutert. Mindestens eines der Klemmelemente 62, 63, hier das zweite Klemmelement 63, weist eine winklig geneigt zur besagten Bewegungsrichtung A angeordnete Wirkfläche 70 auf. Die Wirkfläche 70 liegt an einer Gegenfläche 71 am Supportelement 53 derart an, dass das Klemmelement 63 mit der Wirkfläche 70 beim Spannvorgang die beiden Raststrukturen 55, 56 mit der ersten Klemmkraft K1 beaufschlagt. Mit anderen Worten gesagt, liegt die Wirkfläche 70 winklig geneigt zur Richtung der ersten Klemmkraft K1. In der vorliegenden Ausführungsform ist der Winkel zwischen der Wirkfläche und der Bewegungsrichtung A etwa 45°. Weiter weist das erste Klemmelement 62 eine erste Auflagefläche 87 und das zweite Klemmelement 63 weist eine zweite Auflagefläche 88 auf. Das erste Klemmelement 62 ist über die erste Auflagefläche 87 an der zweiten Auflagefläche 88 am zweiten Klemmelement 63 abgestützt ist. Das erste Klemmelement 62 weist weiter einen klemmelementseitigen Klemmabschnitt 74 auf und die Montageschiene 52 weist einen montageschienenseitigen Klemmabschnitt 75 auf. Die beiden Klemmabschnitte 74, 75 greifen ineinander. Die beiden Klemmabschnitte 74, 75 sind, wie in den Figuren gezeigt vorzugsweise mit einem Hinterschnitt 76 ausgebildet.

In der Figur 9a liegen die beiden Klemmelemente 62, 63 lose zueinander. Ferner ist die Montageschiene 52 noch nicht eingesetzt. Die beiden Klemmelemente 62, 63 stehen über die erste Auflagefläche 87 und die zweite Auflagefläche 88 miteinander in Kontakt.

Die Figur 9b zeigt wie die Montageschiene 52 eingesetzt ist. Die Montageschiene 52 liegt auf der Auflagefläche 54 auf und die beiden Klemmabschnitt 74, 75 greifen ineinander. Die beiden Klemmelemente 62, 63 liegen hier beabstandet zueinander und die Montageschiene 52 kann in Richtung der Profilachse P relativ zur Auflagefläche 54 und zum ersten Klemmelement 62 verschoben werden. Ferner kann vor dem oder nach dem Platzieren der Montageschiene 52 die Höhe der Befestigungseinheit 51 relativ zum oberen Lagerabschnitt eingestellt werden. Von der Figur 9b ist weiter ersichtlich, dass das erste Klemmelement 62 eine Stützfläche 96 aufweist, mit welcher das erste Klemmelement 62 auf einer Fläche 97 am Supportelement 53 abgestützt ist. Die Stützfläche 96 und die Fläche 97 liegen gegenüber des klemmelementseitigen Klemmabschnitts 76, welcher den montageschienenseitigen Klemmabschnitt klemmt.

Ausgehend von der Position in der Figur 9b kann das Spannelement 58 betätigt werden. Dabei werden die beiden Klemmelemente 62, 63 aufeinander zu bewegt. Bei dieser Bewegung schlägt die Wirkfläche 70 an der Gegenfläche 71 am Supportelement 53 an. Durch diesen Kontakt wird das zweite Klemmelement 63 mit der ersten Klemmkraft K1 gegen den oberen Lagerabschnitt gedrückt, welcher dann die Raststruktur 56 in die Raststruktur 55 drückt. Ferner wird die Montageschiene 52 durch das erste Klemmelement mit der zweiten Klemmkraft K2 gegen die Auflagefläche 54 gedrückt.

Ferner kommt die erste Auflagefläche 87 in Kontakt mit der zweiten Auflagefläche 88.

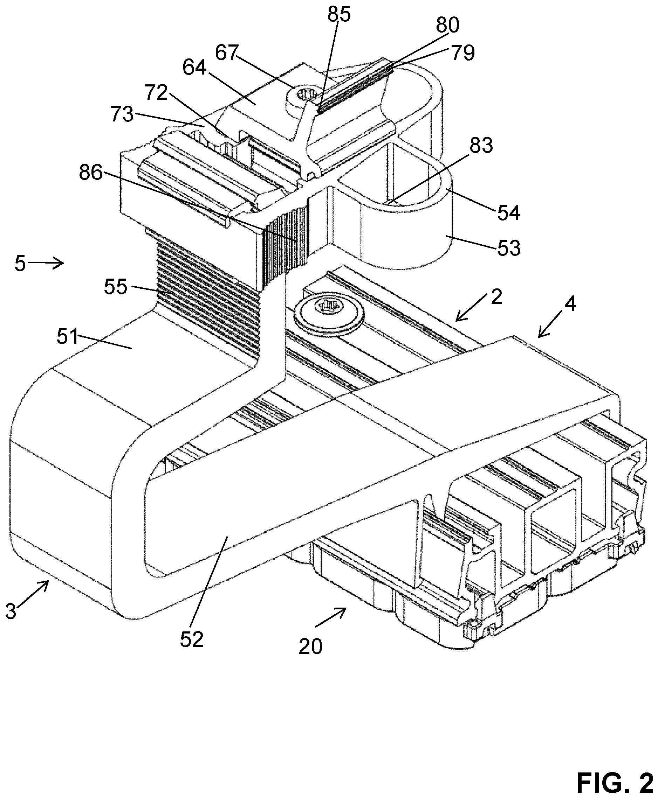

In den Figuren 9a bis 9c wird die Position der Montageschiene 52 nach der Figur 1 gezeigt. Die Montageschiene 52 kann aber auch in einem Winkel um 90° zu dieser Position montiert werden. Dies wird in der Figur 2 veranschaulicht. In dieser Position liegt das erste Klemmelement 62 mit einer klemmelementseitigen Klemmfläche 72 an einer lagerabschnittseitigen Klemmfläche 73 am oberen Lagerabschnitt an. Über dieses Anliegen die besagte zweite Klemmkraft K2 aufbringbar ist. Hier findet kein Kontakt zwischen den beiden Auflageflächen statt.

Im Zusammenhang mit den unterschiedlichen Orientierungen der Montageschiene wird von den Figuren ersichtlich, dass das Supportelement 53 zwei der genannten Auflageflächen 54 für die Montageschiene 52 aufweist, wobei die beiden Auflageflächen 54 derart angeordnet sind, dass die Montageschiene 52 in unterschiedlichen Richtungen orientiert auf der jeweils einer der Auflageflächen 54 platzierbar ist.

Vorzugsweise weist das Supportelement im Bereich der Auflagefläche 54 einen Durchbruch 87 auf. Die Auflagefläche umgibt dabei den Durchbruch und kann beispielsweise als Steg ausgebildet sein, welcher bevorzugt eine Breite von 4 bis 20 Millimeter aufweist. Durch den Durchbruch kann Material eingespart werden.

Von den Figuren 9a bis 9c wird weiter ersichtlich, dass das zweite Klemmelement zwei Schenkelabschnitte 84 aufweist, welche winklig geneigt zueinander verlaufen. Die beiden Schenkelabschnitte 84 weisen an deren freien Enden jeweils die klemmelementseitige Klemmfläche 72 aufweisen. Einer der Schenkelabschnitte wirkt dabei im inneren der Aufnahmeöffnung 59 auf die lagerabschnittseitige Klemmfläche 73. Der andere der beiden Schenkelabschnitte 84 ragt aus der Aufnahmeöffnung 59 und wirkt ausserhalb der Aufnahmeöffnung 59 auf die lagerabschnittseitige Klemmfläche 73. Die Schenkelabschnitte haben den Vorteil, dass diese eine Temperatur bedingte Ausdehnung gut ausgleichen können.

In der gezeigten Ausführungsform ist an der Befestigungseinheit 51 weiterhin ein Federelement 81 angeordnet. Das Federelement 81 stellt eine Federkraft F in Richtung der ersten Klemmkraft K1 bereit. Die Federkraft F wirkt dabei derart, dass die beiden Raststrukturen 55, 56 aufgrund der Federkraft F aufeinander zu bewegbar sind, wobei die Federkraft F kleiner als die erste Klemmkraft K1 ist. Die Federkraft ist in der Figur 9b eingezeichnet. Durch die Federkraft F wird sichergestellt, dass die beiden Raststrukturen 55, 56 während der Montage immer im Eingriff sind. Um eine Höheneinstellung der Befestigungseinheit 51 vorzunehmen ist der Eingriff der beiden Raststrukturen entgegen der Wirkung der Federkraft F aufzuheben.

In der gezeigten Ausführungsform liegt das Federelement 81 im Inneren der besagten Aufnahmeöffnung 59. Vorzugsweise liegt das Federelement 81 zwischen einer der Raststruktur 56 am Supportelement gegenüberliegenden Seitenwand 82 der Aufnahmeöffnung 59 und dem zweiten Klemmelement 63. Weiter weist das Federelement 81 hier eine quaderförmige Struktur auf und ist aus einem elastischen Material.

Vorzugsweise weist das Supportelement aussenseitig zwei einander gegenüberliegende Griffmulden 85 auf. Über diese Griffmulden kann das Supportelement zur Höheneinstellung ergriffen werden. Die Griffmulden können mit Rillen 86 versehen sein, so dass das Supportelement besser ergriffen werden kann.

Von der Figur 9a ist weiterhin ersichtlich, dass das zweite Klemmelement 63 mit einem der beiden Schenkelabschnitt 84 im oberen Bereich des Supportelements 53 am oberen Lagerabschnitt 5 abgestützt ist. Diese Abstützung hat den Vorteil, dass im Falle eines Windsogs das Supportelement 53 ausgehend von der in Figur 9a gezeigten Position nicht über das freie Ende des oberen Lagerabschnitts 5 abkippen kann.

### BEZUGSZEICHENLISTE

- 1: Befestigungssystem
- 2: Grundträger
- 3: Lagerelement
- 4: unterer Lagerabschnitt
- 5: oberer Lagerabschnitt
- 7: erste Führungsaufnahme
- 8: zweite Führungsaufnahme
- 9: erster Rastvorsprung
- 10: zweiter Rastvorsprung
- 11: erste Nut
- 12: zweite Nut
- 13: Verbindungshaken
- 14: Rastlasche
- 15: Steg
- 16: Rastnase
- 17: Anschlagsteg
- 18: erste Anschlagfläche
- 19: zweite Anschlagfläche
- 20: Grundplatte
- 21: Rasthaken
- 22: Führungsvorsprung
- 23: Führungsrille
- 24: Aussparung
- 25: Hohlprofilabschnitt
- 26: Profilsteg
- 27: Profilnut
- 51: Befestigungseinheit
- 52: Montageschiene
- 53: Supportelement
- 54: Auflagefläche
- 55: Raststruktur oberer Lagerabschnitt
- 56: Raststruktur von 53
- 57: Klemmeinheit
- 58: Spannelement
- 59: Aufnahmeöffnung
- 60: Innenwand
- 61: Fläche oberer Lagerabschnitt
- 62: erstes Klemmelement
- 63: zweites Klemmelement
- 64: Auflagefläche
- 65: Durchgangsöffnung
- 66: Gewindeöffnung
- 67: Kopfabschnitt
- 68: Schaftabschnitt
- 69: Gewindeabschnitt
- 70: Wirkfläche
- 71: Gegenfläche
- 72: klemmelementseitige Klemmfläche
- 73: lagerabschnittseitige Klemmfläche
- 74: klemmelementseitiger Klemmabschnitt
- 75: montageelementseitiger Klemmabschnitt
- 76: Hinterschnitt
- 77: klemmelementseitiger Führungsabschnitt
- 78: montageschienenseitiger Führungsabschnitt
- 79: Führungsausnehmung
- 80: Führungskamm
- 81: Federelement
- 82: Seitenwand
- 83: Durchbruch
- 84: Schenkelabschnitte
- 85: Griffmulden
- 86: Rillen
- 87: erste Auflagefläche
- 88: zweite Auflagefläche
- 89: Befestigungsstruktur
- 90: Nute
- 91: Begrenzungssteg
- 92: Quersteg
- 93: Hohlraum
- 94: Seitenwände
- 95: Zwischenteil
- 96: Stützfläche
- 97: Fläche
- A: Bewegungsrichtung
- F: Federkraft
- B: Breite des Grundträgers
- F1: erste Auflagefläche
- F2: zweite Lagerfläche
- K1: erste Klemmkraft
- K2: zweite Klemmkraft
- S1: erster Schenkel
- S2: zweiter Schenkel
- H1: Höhenlage 1
- H2: Höhenlage 2
- H3: Höhenlage 3
- H4: Höhenlage 4

## Patentansprüche

1. Befestigungssystem (1) zur Montage von Solarmodulen bzw. Solarkollektoren auf einem Dach, insbesondere einem Schrägdach, umfassend
einen Grundträger (2), und
ein Lagerelement (3) mit einem unteren Lagerabschnitt (4), über welchen das Lagerelement (3) mit dem Grundträger (2) verbindbar ist, und einem oberen Lagerabschnitt (5) zur Lagerung einer Befestigungseinheit (51),
wobei der Grundträger (2) an einer Dachstruktur befestigbar ist, **dadurch gekennzeichnet,**
**dass** der Grundträger (2) mindestens eine erste Befestigungsstellenanordnung und eine zweite Befestigungsstellenanordnung aufweist, welche Befestigungsstellenanordnungen zur Verbindung des unteren Lagerabschnitts (4) mit dem Grundträger (2) ausgebildet sind und
**dass** der Grundträger (2) eine erste Lagerfläche (F1), die der ersten Befestigungsstellenanordnung zugeordnet ist, und eine zweite Lagerfläche (F2), die der zweiten Befestigungsstellenanordnung zugeordnet ist, aufweist,
wobei die Befestigungsstellenanordnungen so zu der jeweiligen Lagerfläche angeordnet sind, dass bei einer Verbindung des unteren Lagerabschnitts (4) mit der ersten Befestigungsstellenanordnung das Lagerelement (3) auf einer ersten Höhenlage (H1) liegt und dass bei der Verbindung des unteren Lagerabschnitts (4) mit der zweiten Befestigungsstellenanordnung das Lagerelement (3) auf einer zweiten Höhenlage (H2) liegt, wobei die erste Höhenlage (H1) von der zweiten Höhenlage (H2) unterschiedlich ist.

2. Befestigungssystem (1) nach Anspruch 1, **dadurch gekennzeichnet, dass** die erste Befestigungsstellenanordnung eine erste Führungsaufnahme (7) und einen ersten Rastvorsprung (9) aufweist, und dass die zweite Befestigungsstellenanordnung eine zweite Führungsaufnahme (8) und einen zweiten Rastvorsprung (10) aufweist.

3. Befestigungssystem (1) nach Anspruch 2, **dadurch gekennzeichnet, dass** der Grundträger (2) an zwei gegenüberliegenden Seitenflächen je eine sich in Richtung einer Achse erstreckende Nut aufweist, wobei einer ersten Nut (11) die erste Führungsaufnahme (7) und der zweite Rastvorsprung (10) und einer zweiten Nut (12) die zweite Führungsaufnahme (8) und der erste Rastvorsprung (9) zugeordnet ist, wobei vorzugsweise die Führungsaufnahmen (7,8) und Rastvorsprünge (9,10) jeweils im Inneren der entsprechenden Nuten (11,12) liegen.

4. Befestigungssystem (1) nach Anspruch 3, **dadurch gekennzeichnet, dass** die beiden Nuten (11,12) zwischen der ersten Lagerfläche (F1) und der zweiten Lagerfläche (F2) angeordnet sind, wobei der Abstand zwischen der ersten Nut (11) und der zweiten Lagerfläche (F2) kleiner ist als der Abstand zwischen der ersten Nut (11) und der ersten Lagerfläche (F1) und/oder der Abstand zwischen der zweiten Nut (12) und der ersten Lagerfläche (F1) kleiner ist als der Abstand zwischen der zweiten Nut (12) und der zweiten Lagerfläche (F2).

5. Befestigungssystem (1) nach einem der vorhergehenden Ansprüche 2 bis 4, **dadurch gekennzeichnet, dass** der untere Lagerabschnitt (4) eine Rastlasche (14) und einen Verbindungshaken (13) aufweist, wobei beim Verbinden des unteren Lagerabschnitts (4) mit dem Grundträger (2) die Rastlasche (14) am Rastvorsprung (9,10) an- bzw. eingreift und der Verbindungshaken (13) in die Führungsaufnahme (7,8) einragt, insbesondere derart, dass der untere Lagerabschnitt (4) bezüglich einer Bewegung in eine Richtung senkrecht zur ersten Lagerfläche (F1) und/oder bezüglich einer Bewegung in eine Richtung quer zum Grundträger (2) fest verbunden ist.

6. Befestigungssystem (1) nach Anspruch 5, **dadurch gekennzeichnet, dass** ein Anschlagsteg (17) zwischen der Rastlasche (14) und dem Verbindungshaken (13) angeordnet ist, wobei bei einer Verbindung des unteren Lagerabschnitts (4) mit der ersten Befestigungsstellenanordnung der Anschlagsteg (17) mit einer ersten Anschlagsfläche (18) und bei einer Verbindung des unteren Lagerabschnitts (4) mit der zweiten Befestigungsstellenanordnung der Anschlagsteg (17) mit einer zweiten Anschlagsfläche (19) in Kontakt steht.

7. Befestigungssystem (1) nach einem der vorhergehenden Ansprüche, **dadurch gekennzeichnet, dass** der Grundträger (2) als Profilschiene ausgebildet ist, wobei die Profilschiene mindestens zwei Hohlprofilabschnitte (25) aufweist, welche mit Seitenwänden umfangsseitig verschlossen ist; und mindestens ein Profilsteg (26), welcher die zwei Hohlprofilabschnitte (25) miteinander verbindet, aufweist.

8. Befestigungssystem (1) nach einem der vorhergehenden Ansprüche, **dadurch gekennzeichnet, dass** das Befestigungssystem (1) weiterhin eine Grundplatte (20) umfasst, welche am Grundträger (2) befestigbar ist, wobei die Höhenlage des mit dem Grundträger (2) verbundenen Lagerelements (3) um die Höhe der Grundplatte (20) erhöht wird.

9. Befestigungssystem (1) nach Anspruch 8, **dadurch gekennzeichnet, dass** das Lagerelement (3) mittels der ersten und zweiten Befestigungsstellenanordnung und der Grundplatte (20) auf mindestens vier verschiedenen Höhenlagen montierbar ist, wobei bei einer Verbindung des unteren Lagerabschnitts (4) mit der ersten Befestigungsstellenanordnung und mit zusätzlich montierter Grundplatte (20) das Lagerelement (3) auf einer dritten Höhenlage (H3) und bei einer Verbindung des unteren Lagerabschnitts (4) mit der zweiten Befestigungsstellenanordnung und mit zusätzlich montierter Grundplatte (20) das Lagerelement (3) auf einer vierten Höhenlage (H4) liegt, wobei die dritte Höhenlage (H3) von der vierten Höhenlage (H4) unterschiedlich ist.

10. Befestigungssystem (1) nach einem der vorhergehenden Ansprüche, **dadurch gekennzeichnet,**
**dass** die Grundplatte (20) am Grundträger (2) mittels einer Schnappverbindung montierbar ist, wobei die Grundplatte (20) mindestens zwei, vorzugsweise vier, auf gegenüberliegenden Seiten der Grundplatte (20) angeordnete elastisch verformbare Rasthaken (21) aufweist, wobei bei einer Verbindung der Grundplatte (20) mit dem Grundträger (2) die Rasthaken (21) in die Ausnehmungen der mindestens zwei Hohlprofilabschnitte (25) des Grundträgers (2) und/oder die Rasthaken (21) bei einer Verbindung der Grundplatte (20) mit dem Grundträger (2) an den mindestens einen Profilsteg (26) eingreifen; und/oder
**dass** der Grundträger (2) Führungsvorsprünge (22) an der ersten Lagerfläche (F1) und der zweiten Lagerfläche (F2) und die Grundplatte (20) Führungsrillen (23) an der mit der Grundträger (2) verbindbaren Seite aufweisen, wobei bei einer Verbindung der Grundplatte (20) mit dem Grundträger (2) die Führungsvorsprünge (22) von den Führungsrillen (23) aufgenommen werden; und/oder
**dass** der Grundträger (2) mittels mindestens eines Befestigungsmittels an einer Dachstruktur montierbar ist, wobei der Grundträger (2) Aussparungen (24) für die Aufnahme des Befestigungsmittels in den zwischen den Vorsprüngen mindestens zwei durchgehenden Profilnuten (27) aufweist.

11. Befestigungssystem (1) für die Befestigung von Solarmodulen bzw. Solarkollektoren auf einem Dach, insbesondere einem Schrägdach, umfassend
ein Lagerelement (2) mit einem unteren Lagerabschnitt (4) zur Befestigung an einer Dachstruktur und einem oberen Lagerabschnitt (5);
eine Befestigungseinheit (51), welche am oberen Lagerabschnitt (5) höheneinstellbar gelagert ist,
und eine Montageschiene (52),
wobei die Befestigungseinheit (51) ein Supportelement (53) mit einer Auflagefläche (54) aufweist, auf welcher Auflagefläche (54) die Montageschiene (52) aufliegt,
wobei das Supportelement (53) und der obere Lagerabschnitt (5) jeweils über eine die Höhe der Befestigungseinheit (51) am oberen Lagerabschnitt (5) vorgebende Raststruktur (55, 56) verfügen, welche Raststrukturen (55, 56) derart ausgebildet und angeordnet sind, dass die Befestigungseinheit (51) auf unterschiedlichen Höhenlagen am oberen Lagerabschnitt () platzierbar ist, **dadurch gekennzeichnet,**
**dass** die Befestigungseinheit (51) weiterhin eine Klemmeinheit (57) mit einem Spannelement (58) umfasst, und
**dass** die Klemmeinheit (57) derart angeordnet und ausgebildet ist, dass die Klemmeinheit (57) bei Festziehen des Spannelements (58)
- die beiden Raststrukturen (55, 56) mit einer ersten Klemmkraft (K1) beaufschlagt, so dass die beiden Raststrukturen (55, 56) ineinander eingreifend verspannt werden, und
- die Montageschiene (52) mit einer zweiten Klemmkraft (K2) gegen die Auflagefläche (54) gedrückt wird.

12. Befestigungssystem (1) nach Anspruch 11, **dadurch gekennzeichnet, dass** das Supportelement (53) eine Aufnahmeöffnung (59) aufweist, durch welche der obere Lagerabschnitt (5) hindurchragt, wobei an einer Innenwand (60) der Aufnahmeöffnung (59) die Raststruktur (56) des Supportelements (53) angeordnet ist und dass an einer zur Innenwand (60) gerichteten Fläche (61) des oberen Lagerabschnitt (5) die Raststruktur (55) des oberen Lagerabschnitts (5) angeordnet ist.

13. Befestigungssystem (1) nach einem der vorhergehenden Ansprüche, **dadurch gekennzeichnet, dass** die Klemmeinheit (57) ein erstes Klemmelement (62) und ein zweites Klemmelement (63) umfasst, wobei das erste Klemmelement (62) eine Auflagefläche (64) und eine Durchgangsöffnung (65) umfasst, wobei das zweite Klemmelement (63) eine Gewindeöffnung (66) umfasst,
wobei das Spannelement (58) mit einem Kopfabschnitt (67) an der Auflagefläche (64) anliegt, mit einem Schaftabschnitt (68) von der Seite der Auflagefläche (64) her gesehen durch die Durchgangsöffnung (65) hindurchgeführt ist und mit einem Gewindeabschnitt (69) in die Gewindeöffnung (66) eingreift,
wobei die beiden Klemmenelemente (62, 63) bei einem Einschraubvorgang des Gewindeabschnitts (69) in die Gewindeöffnung (66) hinein entlang einer Bewegungsrichtung (A) aufeinander zu bewegbar sind.

14. Befestigungssystem (1) nach Anspruch 13, **dadurch gekennzeichnet,**
**dass** mindestens eines der Klemmelemente (62, 63) eine winklig geneigt zur besagten Bewegungsrichtung (A) angeordnete Wirkfläche (70) aufweist, welche an einer Gegenfläche (71) am Supportelement derart anliegt, dass das Klemmelement (62, 63) mit der Wirkfläche (70) beim Spannvorgang die beiden Raststrukturen (55, 56) mit der ersten Klemmkraft (K1) beaufschlagt; und/oder
**dass** mindestens eines der beiden Klemmelemente (62, 63) mindestens eine klemmelementseitige Klemmfläche (72) aufweist, welche an einer lagerabschnittseitigen Klemmfläche (73) am oberen Lagerabschnitt anliegt, wobei über dieses Anliegen die besagte zweite Klemmkraft (K2) aufbringbar ist; und/oder
**dass** das erste Klemmelement (62) eine erste Auflagefläche (87) und das zweite Klemmelement (63) eine zweite Auflagefläche (88) aufweisen, wobei das erste Klemmelement (62) über die erste Auflagefläche (87) an der zweiten Auflagefläche (88) am zweiten Klemmelement (63) abgestützt ist; und/oder
**dass** das erste Klemmelement (62) eine Stützfläche (96) aufweist, mit welcher das erste Klemmelement (62) auf einer Fläche (97) am Supportelement (53) abgestützt ist, und/oder
**dass** das erste Klemmelement (62) einen klemmelementseitigen Klemmabschnitt (74) aufweist und dass die Montageschiene (52) einen montageschienenseitigen Klemmabschnitt (75) aufweist, wobei die beiden Klemmabschnitte (74, 75) ineinander greifen, und wobei die beiden Klemmabschnitte (74, 75) vorzugsweise mit einem Hinterschnitt (76) ausgebildet sind; und/oder
**dass** das erste Klemmelement (63) einen klemmelementseitigen Führungsabschnitt (77) aufweist und dass die Montageschiene (52) einen montageschienenseitigen Führungsabschnitt (78) aufweist, wobei die Führungsabschnitte (77) vorzugsweise über mindestens eine Führungsausnehmung (79) und mindestens einen Führungskamm (80) verfügen, und wobei jeweils ein Führungskamm (80) in eine Führungsausnehmung (79) einragt.

15. Befestigungssystem (1) nach einem der vorhergehenden Ansprüche, **dadurch gekennzeichnet, dass** weiterhin ein Federelement (81) angeordnet ist, welches Federelement (81) eine Federkraft (F) in Richtung der ersten Klemmkraft (K1) bereitstellt, derart, dass die beiden Raststrukturen (55, 56) aufgrund der Federkraft aufeinander zu bewegbar sind, wobei die Federkraft (F) kleiner als die erste Klemmkraft (K1) ist.

16. Befestigungssystem (1) nach Anspruch 5, **dadurch gekennzeichnet,**
**dass** das Federelement (81) im Inneren der besagten Aufnahmeöffnung (59) liegt; und/oder
**dass** das Federelement (81) zwischen einer der Raststruktur (56) am Supportelement gegenüberliegenden Seitenwand (82) der Aufnahmeöffnung (59) und dem zweiten Klemmelement (63) liegt; und/oder
**dass** das Federelement (81) eine quaderförmige Struktur aufweist und aus einem elastischen Material ist.

17. Befestigungssystem (1) nach einem der vorhergehenden Ansprüche, **dadurch gekennzeichnet, dass** das Supportelement (53) zwei der genannten Auflageflächen (54) für die Montageschiene (52) aufweist, wobei die beiden Auflageflächen (54) derart angeordnet sind, dass die Montageschiene (52) in unterschiedlichen Richtungen orientiert auf der jeweils einer der Auflageflächen (54) platzierbar ist.

18. Befestigungssystem (1) nach Anspruch 17, **dadurch gekennzeichnet, dass** erste Klemmelement (62) bezüglich der jeweiligen Auflagefläche (54) ausgerichtet werden kann, derart, dass das Klemmelement (62) die Montageschiene (52) zur einen Auflagefläche (54) oder zur anderen Auflagefläche (54).
